# EUROPÄISCHE PATENTSCHRIFT

(11) **EP 1 922 497 B1**
(45) Veröffentlichungstag und Bekanntmachung des Hinweises auf die Patenterteilung: **20.10.2010**
(21) Anmeldenummer: 06778185.6
(22) Anmeldetag: 07.08.2006
(51) Int. Cl.: F16D 27/09, F16D 23/04

(54) **GETRIEBESCHALTSTELLE ZUM HERSTELLEN EINER DREHFESTEN VERBINDUNG ZWISCHEN EINEM ZAHNRAD UND EINER WELLE**
GEAR SHIFTING POINT FOR PRODUCING A ROTATIONALLY FIXED CONNECTION BETWEEN A TOOTHED WHEEL AND A SHAFT
POINT DE CHANGEMENT DE VITESSE D'UNE BOITE DE VITESSES POUR L'ETABLISSEMENT D'UNE LIAISON SOLIDAIRE EN ROTATION ENTRE UNE ROUE DENTEE ET UN ARBRE

(30) Priorität: 27.08.2005 DE 102005040633
(43) Veröffentlichungstag der Anmeldung: 21.05.2008
(73) Patentinhaber: DEERE & COMPANY, Moline, Illinois 61265-8098 (US)
(72) Erfinder: TARASINSKI, Nicolai, 68163 Frankenthal (DE); GUGEL, Rainer, 68163 Mannheim (DE)
(74) Vertreter: Holst, Sönke
(86) Internationale Anmeldenummer: PCT/EP2006/065123
(87) Internationale Veröffentlichungsnummer: WO 2007/025845

(56) Entgegenhaltungen:
- DE-B- 1 068 519
- DE-B- 1 131 521
- FR-A1- 2 583 489
- US-A- 2 969 134
- US-A1- 2003 010 144

## Beschreibung

Die Erfindung betrifft eine Getriebeschaltstelle zum Herstellen einer drehfesten Verbindung zwischen einem Zahnrad und einer Welle eines Getriebes. Die Getriebeschaltstelle umfasst eine Welle, eine Schaltmuffe und mindestens ein Zahnrad. Das mindestens eine Zahnrad ist drehbar relativ zur Welle gelagert, beispielsweise mittels einem zwischen Zahnrad und Welle vorgesehenem Wälzlager bzw. Nadellager oder gleitend auf der Welle. Die Schaltmuffe ist auf der Welle verdrehsicher gelagert. Das Zahnrad und die Schaltmuffe sind derart ausgebildet, dass in einem geschalteten Zustand der Getriebeschaltstelle zwischen dem Zahnrad und der Schaltmuffe eine drehfeste Verbindung herstellbar ist und dass in einem neutralen Zustand der Getriebeschaltstelle zwischen dem Zahnrad und der Schaltmuffe keine drehfeste Verbindung herstellbar ist.

Eie gattungsgemäße Getriebeschaltstelle ist aus US-A-2,969,134 bekannt.

Getriebeschaltstellen der eingangs genannten Art sind aus dem Stand der Technik bekannt, sie werden insbesondere zur Schaltung von Getriebestufen in Kraftfahrzeugen eingesetzt. Eine rein auf mechanischer Basis arbeitende Getriebeschaltstelle wird beispielsweise bei einem Zapfwellengetriebe eines Traktors der Anmelderin eingesetzt. Hierbei wird eine im Wesentlichen lineare Bewegung eines mechanischen Gestänges oder eines Bowdenzugs in eine Drehbewegung einer Schaltwelle umgewandelt, auf welcher drehfest eine Kurvenscheibe angeordnet ist. In der Kurvenscheibe sind entsprechende Rillen vorgesehen, in welche sich jeweils ein Zapfen einer Schaltgabel erstreckt. Wird die Schaltwelle zusammen mit der Kurvenscheibe gedreht, so bewirkt das Zusammenspiel von Zapfen und Rille eine Bewegung der Schaltgabel in im Wesentlichen einer Richtung. Hierdurch kann eine Schaltgabel zusammen mit einer entsprechenden Schaltmuffe aus einer Neutralstellung in eine Schaltstellung verbracht werden, um eine drehfeste Verbindung zwischen einer Welle und einem Zahnrad herzustellen. Bei diesem Zapfwellengetriebe handelt es sich um eine nicht synchronisierte Getriebeschaltstelle.

Lediglich beispielsweise wird auf die DE 101 19 748 A1 hingewiesen, bei welcher die erforderliche Energie zum Betätigen einer Schaltgabel einer Getriebeschaltstelle aus einer rotatorischen Bewegung eines Antriebsmotors bereitgestellt wird. Weiterhin sind pneumatisch oder hydraulisch betätigte Getriebeschaltstellen bekannt, mit welchen unmittelbar eine lineare Bewegung einer Schaltgabel erzeugbar ist, so dass der Schaltvorgang durchgeführt werden kann. Auch auf elektromagnetischer Basis arbeitende Aktuatoren sind beispielsweise aus den EP 1 298 362 A2 und EP 1 298 363 A2 bekannt. Bei diesen elektromagnetischen Aktuatoren kommen Dauermagneten zum Einsatz.

Sämtlichen genannten Vorrichtungen zur Betätigung einer Getriebeschaltstelle ist eines gemeinsam, und das ist im Wesentlichen der komplexe mechanische Aufbau unter Verwendung vieler Einzelkomponenten. Hierdurch sind die Getriebeschaltstellen einerseits aufwendig und teuer in der Herstellung und andererseits störanfällig.

Der vorliegenden Erfindung liegt daher die Aufgabe zugrunde, eine Getriebeschaltstelle der eingangs genannten Art anzugeben und weiterzubilden, durch welche die vorgenannten Probleme überwunden werden. Insbesondere soll eine Getriebeschaltstelle zum Herstellen einer drehfesten Verbindung zwischen einem Zahnrad und einer Welle angegeben und weitergebildet werden, welche kostengünstig ist und welche möglichst störfrei arbeitet.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist die Getriebeschaltstelle derart ausgestaltet dass die Schaltmuffe mindestens einen Elektromagneten aufweist und dass bei einer Aktivierung des Elektromagneten ein geschalteter Zustand der Getriebeschaltstelle herstellbar ist.

Mit anderen Worten wird die Relativbewegung zwischen dem Zahnrad und der Schaltmuffe durch das elektromagnetische Prinzip bewirkt und ist auf das Bestromen des Elektromagneten der Schaltmuffe zurückzuführen. Wenn nämlich der Elektromagnet aktiviert wird, baut der Elektromagnet ein Magnetfeld auf. Dieses Magnetfeld bildet sich über den Luftspalt bzw. zwischen Schaltmuffe und Zahnrad aus und bewirkt eine Kraft, die die Schaltmuffe an das Zahnrad zieht bzw. die das Zahnrad an die Schaltmuffe zieht, so dass Zahnrad und Schaltmuffe ineinander eingreifen, wodurch zwischen Zahnrad und Welle eine drehfeste Verbindung gebildet ist. Die Getriebeschaltstelle könnte grundsätzlich auch derart ausgebildet sein, dass das Magnetfeld des Elektromagneten eine abstoßende Kraft zwischen Zahnrad und Schaltmuffe ausübt, wenn nämlich eines der beiden Bauteile zumindest teilweise permanentmagnetisch ausgebildet ist und das Magnetfeld des Permanentmagneten entgegengesetzt zu dem Magnetfeld des Elektromagneten orientiert ist.

Eine Schaltmuffe im Sinn der vorliegenden Erfindung ist also insbesondere ein Bauteil, welches eine drehfeste Verbindung zwischen der Welle und einem Zahnrad herstellt. Einerseits kann die Schaltmuffe an der Welle drehfest und räumlich fixiert sein und ein Zahnrad - ein Losrad - kann sich zur Schaltmuffe bewegen, um eine drehfeste Verbindung zwischen Zahnrad und Schaltmuffe herzustellen. Andererseits kann die Schaltmuffe an der Welle drehfest jedoch in Längsrichtung der Welle verschiebbar angeordnet sein, um sich auf ein - in Längsrichtung der Welle im Wesentlichen unverändert angeordnetes - Zahnrad - ein Losrad - zu bewegen, um eine drehfeste Verbindung zwischen Zahnrad und Schaltmuffe herzustellen.

Somit ist zu einem Gangwechsel bzw. zum Schalten der Getriebeschaltstelle lediglich ein Strom ein- oder abzuschalten. Mit Hilfe dieses Prinzips können in ganz besonders vorteilhafter Weise auch eine Vielzahl mechanischer Einzelkomponenten entfallen, da der Elektromagnet unmittelbar eine Relativbewegung zwischen Zahnrad und Schaltmuffe bewirkt. Durch die erfindungsgemäße Wirkungsweise wird in ganz besonders vorteilhafter Weise eine ganz erhebliche Vereinfachung einer auf elektromagnetischer Wirkungsweise arbeitenden Getriebeschaltstelle erzielt. Hierdurch ist nämlich nicht mehr einerseits ein Führungsmittel für einen Anker, wie er beispielsweise bei dem elektromagnetischen Aktuator aus den EP 1 298 362 A2 und EP 1 298 363 A2 bekannt ist, erforderlich, und andererseits auch keine an der Schaltmuffe angeordnete Schaltgabel der Getriebeschnittstelle erforderlich. Dadurch, dass die Getriebeschaltstelle keine Schaltgabel benötigt, wird sozusagen dieses Bauteil eingespart. Somit kann die erfindungsgemäße Getriebeschaltstelle kostengünstiger dargestellt werden und arbeitet verlässlicher und weniger störanfällig, da die Getriebeschaltstelle weniger Komponenten bzw. Bauteile aufweist.

Die Schaltmuffe ist im Wesentlichen ringförmig bzw. torusförmig ausgebildet. Die Welle erstreckt sich durch die Schaltmuffe. In einer ganz besonders bevorzugten Ausführungsform ist der mindestens eine Elektromagnet in die Schaltmuffe integriert. Hierdurch kann in ganz besonders vorteilhafter Weise eine kompakte Bauform erzielt werden, was bei Getrieben mit vielen Zahnrädern bzw. vielen Gängen und somit viele Getriebeschaltstellen insgesamt eine kompakte Bauform des Getriebes ermöglicht. Durch die Integration des Elektromagneten in die Schaltmuffe ist des Weiteren eine hohe Effektivität bei der Wirkungsweise der erfindungsgemäßen Getriebeschnittstelle erzielbar, da das von dem Elektromagneten erzeugte Magnetfeld unmittelbar anziehend bzw. abstoßend auf das Zahnrad wirkt. Durch die erfindungsgemäße Ausbildung der Getriebeschaltstelle mit wenigen Bauteilen kann in ganz besonders vorteilhafter Weise eine kurze Schaltzeit der Getriebeschnittstelle erzielt werden. Dementsprechend ist es zweckmäßig, den mindestens einen Elektromagneten im Wesentlichen ringförmig auszubilden, damit er an die grundsätzliche Form der Schaltmuffe angepasst ist.

Im Konkreten könnte der Elektromagnet eine Spule und einen Kern aufweisen. Es ist eine Bestromungseinrichtung vorgesehen, mit welcher der Elektromagnet bzw. die Spule des Elektromagneten mit Strom beaufschlagbar ist. Die Bestromungseinrichtung könnte mindestens einen Schleifring aufweisen, der bezüglich der Längsrichtung der Welle in einem mittleren Bereich der Schaltmuffe außen ringförmig angebracht bzw. angeordnet sein könnte. Alternativ könnte die Bestromungseinrichtung mittels einer elektromagnetischen Kupplung oder elektromagnetischen Bremse realisiert werden, bei der das magnetische Feld über einen klein gehaltenen Luftspalt von einem stehenden Spulenelement auf die drehenden Elemente übertragen wird. Eine schleifringlose Stromübertragung wäre auch nach dem Prinzip eines Trafos denkbar, wobei dann die Welle als das Joch genutzt wird.

Grundsätzlich ist ein Zahnrad und die Schaltmuffe derart ausgebildet, dass zwischen einem Zahnrad und der Schaltmuffe eine formschlüssige oder kraftschlüssige Verbindung herstellbar ist, wobei eine formschlüssige Verbindung zwischen Zahnrad und Schaltmuffe bevorzugt wird.

Eine formschlüssige Verbindung könnte beispielsweise dadurch realisiert werden, dass das Zahnrad eine Verzahnung in radialer oder in axialer Richtung aufweist und dass die Schaltmuffe eine hierzu im Wesentlichen komplementäre Verzahnung - ebenfalls in radialer oder axialer Richtung - aufweist. Bevorzugt ist vorgesehen, dass das Zahnrad eine Verzahnung in axialer Richtung aufweist, das heißt in Längsrichtung der Welle des Getriebes. Somit sind nur wenig zusätzliche Verzahnungen erforderlich, um eine erfindungsgemäße Getriebeschaltstelle diesbezüglich auszubilden. Hierdurch können die erforderlichen Schaltwege kleiner gehalten werden als das bei einer Verzahnung in radialer Richtung der Fall ist, da die spitzen Zähne bei Axialverzahnungen die tragende, drehmomentübertagende Verzahnung darstellen. Bei einer Radialverzahnung sind die spitzen Zähne lediglich eine "Einfädelhilfe" und für die tragende, drehmomentübertragende Verzahnung muss noch weiter Verfahren werden.

In Abhängigkeit der zu erzielenden Charakteristik der Getriebeschaltstelle ist die Verzahnung abweisend, gerade oder hinterschnitten ausgebildet. Eine abweisende Verzahnungen wird dann gewählt werden, wenn die Getriebeschaltstelle - mehr oder weniger automatisch - aus einem geschalteten Zustand in einen neutralen Zustand verbracht wird, falls der Elektromagnet deaktiviert ist und keine Anziehungskraft zwischen Schaltmuffe und entsprechendem Zahnrad mehr vorliegt, da dann die Form der Verzahnung ein Abweisen der Schaltmuffe von dem Zahnrad bewirkt. Eine gerade oder eine hinterschnittene Verzahnung wird man dann wählen, wenn die Getriebeschaltstelle aus einem geschalteten Zustand in einen neutralen Zustand mit zusätzlichen Maßnahmen verbringbar ist, beispielsweise wenn die Getriebeschaltstelle aufgrund einer Federvorspannung einen neutralen Zustand einnimmt oder aber wenn die drehfeste Verbindung zwischen Zahnrad und Schaltmuffe durch Einwirken einer entsprechenden Kraft gelöst wird, zum Beispiel durch Aktivieren eines weiteren Elektromagneten, der entsprechend angeordnet und angesteuert wird.

Gemäß einer bevorzugten Ausführungsform ist mindestens ein Kraftmittel vorgesehen, unter dessen Krafteinwirkung ein neutraler Zustand zwischen einem Zahnrad und des Schaltmuffe der Getriebeschaltstelle realisierbar ist. Das Kraftmittel weist insbesondere dann diese Wirkung auf, wenn der Elektromagnet deaktiviert ist. Bei dem Kraftmittel könnte es sich beispielsweise um eine Federeinrichtung bzw. eine Feder handeln, welche Zahnrad und Schaltmuffe in einen beabstandeten Zustand drängen.

Grundsätzlich kann die erfindungsgemäße Getriebeschaltstelle lediglich ein Zahnrad oder zwei Zahnräder aufweisen. Falls die Getriebeschaltstelle ein Zahnrad und eine Schaltmuffe mit einem Elektromagneten aufweist, ist das Zahnrad benachbart zu dem Elektromagneten angeordnet. Bei einer Aktivierung des Elektromagneten ist eine Relativbewegung zwischen Zahnrad und Elektromagneten bewirkbar, um das Zahnrad und die Schaltmuffe in einen eingerückten Zustand zu verbringen.

Falls die Getriebeschaltstelle zwei Zahnräder und eine Schaltmuffe mit zwei - insbesondere in axialer Richtung zueinander beabstandet angeordnete - Elektromagneten aufweist, ist die Schaltmuffe samt den beiden Elektromagneten zwischen den zwei Zahnrädern angeordnet. Jeweils ein Zahnrad ist benachbart zu einem Elektromagneten angeordnet. Bei einer Aktivierung eines Elektromagneten ist eine Relativbewegung zwischen dem zu dem aktivierten Elektromagneten benachbart angeordneten Zahnrad und dem aktivierten Elektromagneten bewirkbar, um das Zahnrad und die Schaltmuffe in einen eingerückten Zustand zu verbringen.

Erfindungsgemäß weist ein Zahnrad oder ein Elektromagnet mindestens ein Synchronisationselement auf, mit welchem eine reibschlüssige Verbindung zwischen dem Zahnrad und der Schaltmuffe dann herstellbar ist, wenn der Elektromagnet aktiviert ist, um das Zahnrad auf eine Drehzahl zu bringen, die im Wesentlichen der Drehzahl der Schaltmuffe bzw. der Welle entspricht. Hiermit kann also eine synchronisierte Getriebeschaltstelle zur Verfügung gestellt werden, da das Synchronisationselement beim Vorliegen einer reibschlüssigen Verbindung zwischen Zahnrad und Schaltmuffe eine bremsende/beschleunigende Wirkung zwischen der mit der Welle rotierenden Schaltmuffe und dem unter Umständen stillstehenden Zahnrad erzielt wird. Der Elektromagnet wird in diesen Synchronisationsschritt mit einem elektrischen Strom vorgebbarer elektrischer Stromstärke beaufschlagt, die derart bemessen ist, dass das von dem Elektromagneten erzeugte Magnetfeld eine ausreichende Stärke aufweist, um mit dem Synchronisationselement eine ausreichende Kraft zum Herstellen einer reibschlüssigen Verbindung zu bewirken. Üblicherweise wird diese Stromstärke nicht ausreichen, die Getriebeschaltstelle in einem geschalteten Zustand zu verbringen. Hierzu wäre eine größere Stromstärke durch den Elektromagneten fließen zu lassen.

Das Synchronisationselement könnte in Längsrichtung der Welle relativbewegbar zu dem Zahnrad angeordnet sein. Das Synchronisationselement könnte im Wesentlichen ringförmig oder zylinderförmig ausgebildet sein und in einer im Wesentlichen ringförmig oder zylinderförmig ausgebildeten Aussparung des Zahnrads oder des Elektromagneten angeordnet sein.

Damit der Verschleiß des Synchronisationselements bzw. die Anlagefläche des Synchronisationselements möglichst gering ist und/oder der Synchronisationsvorgang möglichst effizient abläuft, könnte der Elektromagnet und/oder die Schaltmuffe einen dem Synchronisationselement zugewandt angeordneten Reibbelag aufweisen, an welchem das Synchronisationselement bei dem Synchronisationsvorgang zur Anlage kommt. Hierdurch ist in besonders vorteilhafter Weise auch ein automatischer Verschleissausgleich realisiert. Falls nämlich der Reibbelag über die Zeit durch die Synchronisationsvorgänge abgetragen wird, gleicht sich dies durch das Synchronisationselement aus, welches um einen um den Verschleißweg vergrößerten Weg bewegt wird.

Im Folgenden wird eine Getriebeschaltstelle beschrieben, bei welcher das mindestens eine Zahnrad in Längsrichtung der Welle verschiebbar angeordnet ist und bei welcher die Schaltmuffe in Längsrichtung der Welle fixiert angeordnet ist. Dementsprechend wird bei Aktivierung des Elektromagneten das Zahnrad von dem Magnetfeld an die Schaltmuffe gezogen bzw. bewegt, wodurch zwischen dem Zahnrad und der Schaltmuffe eine drehfeste Verbindung hergestellt wird und somit sich die Getriebeschaltstelle in dem geschalteten Zustand befindet. Somit entspricht der geschaltete Zustand der Getriebeschaltstelle einem aktivierten Zustand des Elektromagneten.

Falls der Elektromagnet deaktiviert ist befindet sich die Getriebeschaltstelle in dem neutralen Zustand, das heißt zwischen dem Zahnrad und der Schaltmuffe liegt keine drehfeste Verbindung vor. Damit in dem neutralen Zustand die Verzahnung des Zahnrads mit der der Schaltmuffe nicht in Eingriff kommt, ist bevorzugt zwischen der Schaltmuffe und einem Zahnrad ein - vorzugsweise in Form einer Feder ausgebildetes - Kraftmittel vorgesehen, welches das Zahnrad weg von der Schaltmuffe drängt.

Eine hierzu alternative Getriebeschaltstelle kann in erfindungsgemäßer Weise dadurch realisiert werden, dass das mindestens eine Zahnrad in Längsrichtung der Welle im Wesentlichen an der gleichen Position angeordnet bzw. gelagert ist. Die Schaltmuffe ist mit dem mindestens einen Elektromagneten in Längsrichtung der Welle bewegbar angeordnet. Dementsprechend bewegt sich die Schaltmuffe bei einer Aktivierung eines Elektromagneten aufgrund der magnetischen Anziehungskraft auf das Zahnrad zu, so dass hierdurch die Getriebeschaltstelle in einen geschalteten Zustand verbracht wird und eine drehfeste Verbindung zwischen dem Zahnrad und der Schaltmuffe und damit mit der Welle hergestellt ist. Das Zahnrad könnte beispielsweise mittels Anlage an einer Scheibe in Position gehalten werden, wobei die Scheibe mit einem Schnappring auf der Welle gehalten wird.

Auch bei dieser Getriebeschaltstelle ist ein Kraftmittel vorgesehen, welches nunmehr die Schaltmuffe in eine von dem Zahnrad beabstandete Position drängt.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen jeweils in einer schematischen Darstellung in
- Fig. 1: in einer Schnittansicht ein erstes Beispiel einer nicht erfindungsgemäßen Getriebeschaltstelle in einem neutralen Zustand,
- Fig. 2: in einer Schnittansicht das Beispiel aus Fig. 1 in einem geschalteten Zustand,
- Fig. 3: in einer Schnittansicht ein Ausführungsbeispiel einer erfindungsgemäßen Getriebeschaltstelle in einem neutralen Zustand,
- Fig. 4: in einer Schnittansicht das Ausführungsbeispiel aus Fig. 3 in einem synchronisierenden Zustand und
- Fig. 5: in einer Schnittansicht das Ausführungsbeispiel aus den Fig. 3 und 4 in einem geschalteten Zustand.

Gleiche oder ähnliche Bauteile bzw. Baugruppen sind in den Fig. mit denselben Bezugszeichen gekennzeichnet.

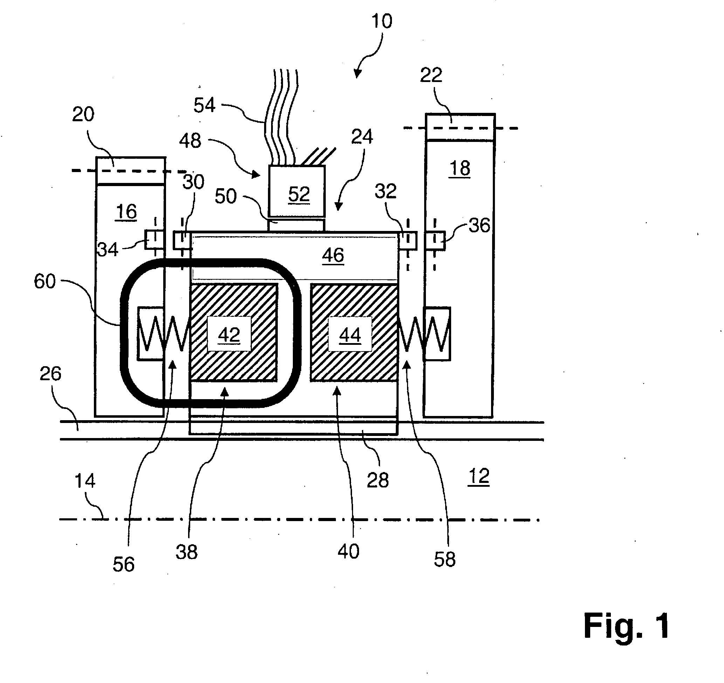

Fig. 1 zeigt eine nicht erfindungsgemäße Getriebeschaltstelle 10. Die Getriebeschaltstelle 10 umfasst eine Welle 12, die um ihre Längsachse 14 drehbar gelagert ist, wobei die Lagerstellen der Welle 12 in Fig. 1 nicht gezeigt sind. Weiterhin umfasst die Getriebeschaltstelle 10 zwei Zahnräder 16, 18, welche relativ zur Welle 12 drehbar auf der Welle 12 gelagert sind. Die Zahnräder 16, 18 sind in Form von Losrädern ausgebildet, sind also in Längsrichtung der Welle 12 verschiebbar angeordnet. Die Zahnräder 16, 18 weisen die jeweils eine Laufverzahnung 20, 22 auf, welche jeweils mit einem anderen, in Fig. 1 nicht gezeigten Zahnrad kämmt.

Weiterhin weist die Getriebeschaltstelle 10 eine Schaltmuffe 24 auf, die auf der Welle 12 fixiert ist, also in Längsrichtung der Welle 12 nicht verschiebbar angeordnet ist. Die Welle 12 weist eine Außenverzahnung 26 auf, welche in Eingriff mit der Innenverzahnung 28 der Schaltmuffe 24 steht, so dass auch eine drehfeste Verbindung zwischen der Schaltmuffe 24 und der Welle 12 gebildet ist. Die Schaltmuffe 24 weist eine in axialer Richtung sich nach außen erstreckende Verzahnung 30, 32 auf, welche in eine komplementär ausgebildete, nach innen erstreckende Verzahnung 34, 36 der Zahnräder 16, 18 eingreifen kann. Die Verzahnung 30 bis 36 ist in dem Ausführungsbeispiel gemäß Fig. 1 gerade ausgebildet, also weder abweisend noch hinterschnitten. Somit ist zwischen der Schaltmuffe 24 und jeweils einem Zahnrad 16, 18 eine formschlüssige Verbindung realisierbar.

Die Schaltmuffe 24 weist für jedes Zahnrad 16, 18 jeweils einen Elektromagneten 38, 40 auf. Jeder der Elektromagneten 38, 40 weist eine Spule 42, 44 auf, welche auf einem gemeinsamen Kern 46 aus einem das Magnetfeld der Spulen 42, 44 verstärkenden Material (Weicheisenmaterial) gewickelt sind. Die Elektromagneten 38, 40 sind im Wesentlichen ringförmig ausgebildet, und entsprechen somit im Wesentlichen der Form der Schaltmuffe 24. Somit sind die Elektromagneten 38, 40 in die Schaltmuffe 24 integriert.

Zum Bestromen der Spulen 42, 44 der Elektromagneten 38, 14 ist die Bestromungseinrichtung 48 vorgesehen, welche in Form eines Schleifrings ausgebildet ist, wobei ein Teil 50 drehfest an der Schaltmuffe 24 und ein anderer Teil 52 des Schleifrings an dem in Fig. 1 nicht gezeigten Getriebegehäuse fixiert vorgesehen ist. Die Stromkabel 54 ermöglichen eine elektrische Verbindung zwischen einer in Fig. 1 nicht gezeigten Stromquelle und den Spulen 42, 44 der Elektromagneten 38, 40.

Zwischen dem Zahnrad 16 und der Schaltmuffe 24 bzw. zwischen dem Zahnrad 18 und der Schaltmuffe 24 ist jeweils ein Kraftmittel vorgesehen, welches in Form einer Feder 56, 58 ausgebildet ist. Die Federn 56, 58 drängen die Zahnräder 16, 18 jeweils in eine von der Schaltmuffe 24 beabstandete Position, so dass die Verzahnungen 30 bis 36 nicht eingreifen. Dieser Zustand der Getriebeschaltstelle 10 entspricht der neutralen Stellung, es ist also weder zwischen dem Zahnrad 16 und der Schaltmuffe 24 noch zwischen dem Zahnrad 18 und der Schaltmuffe 24 eine drehfeste Verbindung ausgebildet.

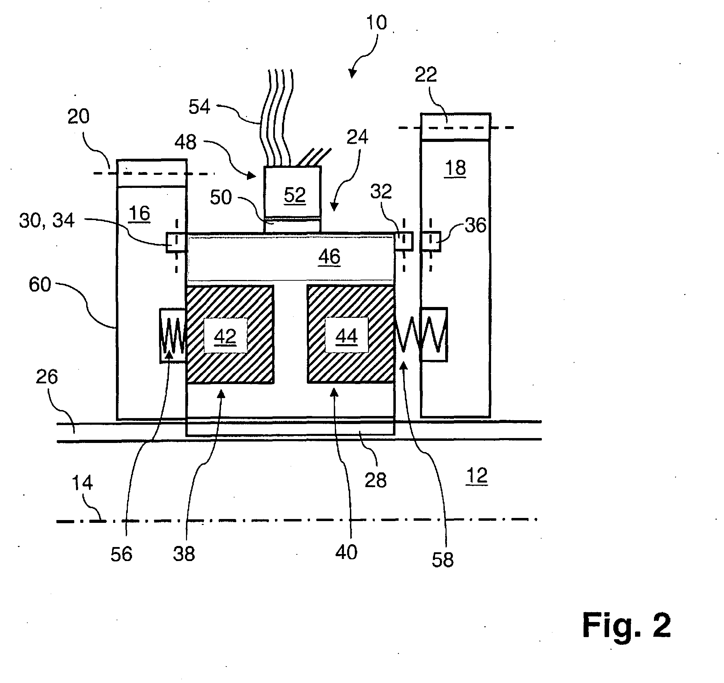

Mit dem Bezugszeichen 60 ist eine Feldlinie des Magnetfelds des Elektromagneten 38 gekennzeichnet, wobei sich das Magnetfeld des Elektromagneten 38 bei Bestromen der Spule 42 ausgebildet. Hierdurch wird aufgrund des Magnetfelds des Elektromagneten 38 das Zahnrad 16 zur Schaltmuffe 24 angezogen, bis das Zahnrad 16 an der Schaltmuffe 24 bzw. an dem Kern 46 des Elektromagneten 38 plan zur Anlage kommt, so dass die äußere Verzahnung 30 der Schaltmuffe 24 in die innere Verzahnung 34 des Zahnrads 16 eingreift. Dieser Zustand ist in Fig. 2 gezeigt, wobei hier der geschaltete Zustand der Getriebeschaltstelle 10 bezüglich des Zahnrads 16 und der Schaltmuffe 24 vorliegt.

Es sei ganz besonders darauf hingewiesen, dass die in den Fig. 1 und 2 gezeigte Getriebeschaltstelle 10 die Welle 12, lediglich ein Zahnrad 16 sowie lediglich den linken Teil der Schaltmuffe 24 nebst Elektromagneten 38 und Bestromungseinrichtung 48 aufweisen könnte. Eine solche Getriebeschaltstelle 10 weist lediglich zwei Schaltzustände auf, nämlich einen neutralen Zustand sowie einen geschalteten Zustand des Zahnrads 16. Die in den Fig. 1 und 2 gezeigte Getriebeschaltstelle 10 weist hingegen drei unterschiedliche Schaltzustände auf, nämlich den in Fig. 1 gezeigten neutralen Zustand, in welchem weder das Zahnrad 16 noch das Zahnrad 18 in drehfester Verbindung mit der Schaltmuffe 24 steht, sowie den ersten geschalteten Zustand des Zahnrads 16 - in Fig. 2 gezeigt - sowie den zweiten geschalteten Zustand des Zahnrads 18, in den Fig. 1 und 2 nicht gezeigt.

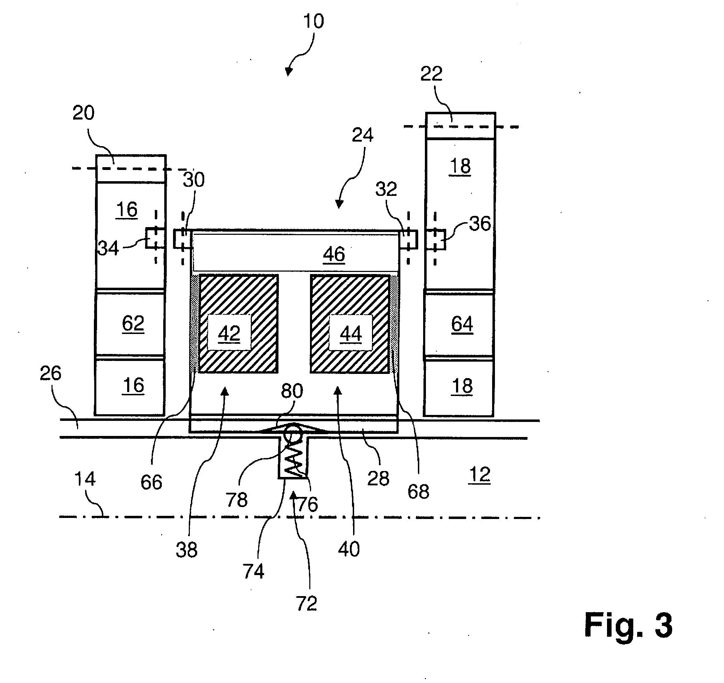

In den Fig. 3 bis 5 ist ein Ausführungsbeispiel einer erfindungsgemäßen Getriebeschaltstelle 10 gezeigt. Bei dieser Getriebeschaltstelle 10 sind die Zahnräder 16, 18 ebenfalls drehbar relativ zur Welle 12 angeordnet, jedoch derart, dass sie nicht in Längsrichtung der Welle 12 verschiebbar sind. Vielmehr ist die Schaltmuffe 24 dieser Getriebeschaltstelle 10 entlang der Längsrichtung der Welle 12 verschiebbar angeordnet. Jedes Zahnrad 16, 18 weist jeweils ein Synchronisationselement 62, 64 auf, welche - wie auch die Zahnräder 16, 18 - aus Metall ausgebildet sind und somit von dem aktivierten Elektromagneten 38 bzw. 40 angezogen werden.

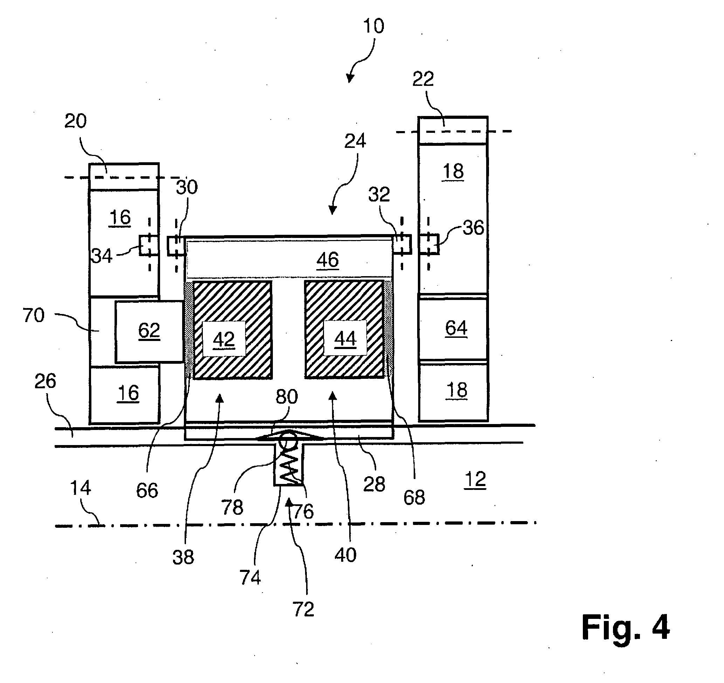

Fig. 4 zeigt die Getriebeschaltstelle 10 in einem Zustand, in welchem der Elektromagnet 38 derart aktiviert ist, dass das Synchronisationselement 62 aufgrund des Magnetfelds angezogen wird. In diesem Zustand kommt das Synchronisationselement 62 an dem Reibbelag 66 zur Anlage. Der Elektromagnet 40 weist einen Reibbelag 68 auf, an welchem das Synchronisationselement 64 zur Anlage kommt, falls der Elektromagnet 40 zum Synchronisieren aktiviert ist. Durch den Synchronisationsvorgang kann die Drehzahl des gegebenenfalls nicht drehenden Zahnrads 16, 18 auf eine Drehzahl gebracht werden, welche der Drehzahl der mit der Welle 12 rotierenden Schaltmuffe 24 entspricht. In dieser Darstellung wird deutlich, dass das im Wesentlichen zylinderförmig ausgebildete Synchronisationselement 62 in einer zylinderförmigen Aussparung 70 des Zahnrads 16 angeordnet ist. Es sei bemerkt, dass in dem in Fig. 4 gezeigten Zustand der Getriebeschaltstelle 10 die Schaltmuffe 24 sich noch immer in dem neutralen, auch in dem in Fig. 1 gezeigten Zustand befindet.

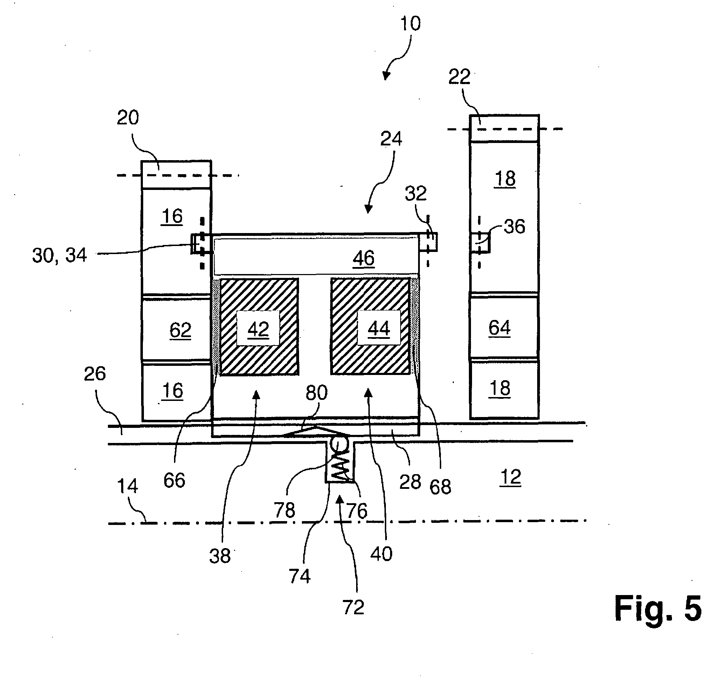

Fig. 5 zeigt schließlich die Getriebeschaltstelle 10 in einem Zustand, in welchem der Elektromagnet 38 derart aktiviert ist bzw. wurde, dass die Schaltmuffe 24 aufgrund des von dem Elektromagneten 38 erzeugten Magnetfelds zu dem Zahnrad 16 angezogen wird, und zwar derart, dass die Schaltmuffe 24 bzw. der Elektromagnet 38 im Wesentlichen plan an dem Zahnrad 16 anliegt. Dementsprechend greifen die Verzahnungen 30 der Schaltmuffe 24 in die Verzahnungen 34 des Zahnrads 16 ein und es ist eine drehfeste Verbindung zwischen der Schaltmuffe 24 und dem Zahnrad 16 hergestellt. Da eine drehfeste Verbindung zwischen der Welle 12 und der Schaltmuffe 24 aufgrund der Verzahnungen 26, 28 hergestellt ist, ist somit eine drehfeste Verbindung zwischen der Welle 12 und dem Zahnrad 16 hergestellt. Dies entspricht dem geschalteten Zustand des Zahnrads 16 der Getriebeschaltstelle 10 aus den Fig. 3 bis 5.

Das Kraftmittel 72 der Getriebeschaltstelle 10 aus den Fig. 3 bis 5 ist wie folgt ausgebildet: die Welle 12 weist in radialer Richtung eine Aussparung in Form eines Sacklochs 74 auf. In dem Sackloch 74 ist eine Feder 76 angeordnet, welche die Kugel 78 in radialer Richtung nach außen in die Ausnehmung 80 der Schaltmuffe 24 drängt. Die Ausnehmung 80 der Schaltmuffe 24 ist derart positioniert bzw. ausgebildet, dass die Schaltmuffe 24 in die neutrale Stellung der Getriebeschaltstelle 10 - die in den Fig. 3 und 4 gezeigt ist - gedrängt wird. Falls die magnetische Anziehungskraft groß genug ist, dass die Schaltmuffe 24 zu einem der Zahnräder 16, 18 angezogen wird, wird die Kugel 78 entgegen der Federkraft der Feder 76 aufgrund der schrägen Ausbildung der Ausnehmung 80 in radialer Richtung nach innen gedrückt. Falls der Elektromagnet 38 oder 40 deaktiviert wird, also keine Anziehungskraft zwischen Schaltmuffe 24 und einem der Zahnräder 16 oder 18 vorliegt, drängt die Feder 76 die Kugel 78 in radialer Richtung nach außen in die Ausnehmung 80 der Schaltmuffe 24, wodurch aufgrund der schrägen Ausführung der Ausnehmung 80 die Schaltmuffe wieder in ihren neutralen mittigen Zustand verbracht wird, welcher in den Fig. 3 und 4 gezeigt ist.

Die in den Fig. 1 bis 5 gezeigten Bauteile sind in einem in den Fig. nicht gezeigten Getriebegehäuse angeordnet. Selbstverständlich müssten sich z.B. die Teile der Zahnräder 16 und 18, die Schaltmuffe 24 nebst Elektromagneten 38, 40 sowie die äußere Verzahnung 26 der Welle 12 gespiegelt an der Achse 14 eingezeichnet sein, was jedoch in den Fig. im vorliegenden Fall nicht erfolgt ist. Dementsprechend erstreckt sich die Welle 12 durch die Zahnräder 16 und 18, ist jedoch damit nicht stets in drehfester Verbindung.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Getriebeschaltstelle zum Herstellen einer drehfesten Verbindung zwischen einem Zahnrad und einer Welle, mit einer Welle (12), einer Schaltmuffe (24) und mindestens einem Zahnrad (16, 18), wobei das mindestens eine Zahnrad (16, 18) gegenüber der Welle (12) drehbar angeordnet ist, wobei die Schaltmuffe (24) mindestens einen Elektromagneten (38, 40) aufweist und auf der Welle (12) verdrehsicher angebracht ist, und wobei das mindestens eine Zahnrad (16, 18) und die Schaltmuffe (24) derart ausgebildet sind, dass bei einer Aktivierung des mindestens einen Elektromagneten (38, 40) in einem geschalteten Zustand der Getriebeschaltstelle (10) eine drehfeste Verbindung zwischen dem mindestens einen Zahnrad (16, 18) und der Schaltmuffe (24) herstellbar ist, und dass in einem neutralen Zustand der Getriebeschaltstelle (10) zwischen dem mindestens einen Zahnrad (16, 18) und der Schaltmuffe (24) keine drehfeste Verbindung herstellbar ist, **dadurch gekennzeichnet, dass** das mindestens eine Zahnrad (16, 18) oder der mindestens eine Elektromagnet (38, 40) mindestens ein Synchronisationselement (62, 64) aufweist, mit welchem eine reibschlüssige Verbindung zwischen dem mindestens einen Zahnrad (16, 18) und der Schaltmuffe (24) dann herstellbar ist, wenn der mindestens eine Elektromagnet (38, 40) aktiviert ist, um das mindestens eine Zahnrad (16, 18) auf eine Drehzahl zu bringen, die im Wesentlichen der Drehzahl der Schaltmuffe (24) entspricht.

2. Getriebeschaltstelle nach Anspruch 1, **dadurch gekennzeichnet, dass** das mindestens eine Synchronisationselement (62, 64) in Längsrichtung der Welle (12) relativbewegbar zu dem mindestens einen Zahnrad (16, 18) angeordnet ist, wobei das mindestens eine Synchronisationselement (62, 64) im Wesentlichen ringförmig oder zylinderförmig ausgebildet und in einer im Wesentlichen ringförmig oder zylinderförmig ausgebildeten Aussparung (70) des mindestens einen Zahnrads (16, 18) oder des mindestens einen Elektromagneten (38, 40) angeordnet ist.

3. Getriebeschaltstelle nach Anspruch 1 oder 2, **dadurch gekennzeichnet, dass** der mindestens eine Elektromagnet (38, 40) und/oder die Schaltmuffe (24) einen dem mindestens einen Synchronisationselement (62, 64) zugewandten Reibbelag (66, 68) aufweist, an welchem das mindestens eine Synchronisationselement (62, 64) beim Synchronisationsvorgang zur Anlage kommt.

4. Getriebeschaltstelle nach einem der Ansprüche 1 bis 3, **dadurch gekennzeichnet, dass** der mindestens eine Elektromagnet (38, 40) in die Schaltmuffe (24) integriert ist.

5. Getriebeschaltstelle nach einem der Ansprüche 1 bis 4, **dadurch gekennzeichnet, dass** der mindestens eine Elektromagnet (38, 40) im Wesentlichen ringförmig ausgebildet ist.

6. Getriebeschaltstelle nach einem der Ansprüche 1 bis 5, **dadurch gekennzeichnet, dass** der mindestens eine Elektromagnet (38, 40) eine Spule (42, 44) und einen Kern (46) aufweist, wobei eine Bestromungseinrichtung (48) vorgesehen ist, mit welcher die Spule (42, 44) des mindestens einen Elektromagneten (38, 40) mit Strom beaufschlagbar ist, wobei die Bestromungseinrichtung (48) vorzugsweise mindestens einen Schleifring (50, 52) aufweist.

7. Getriebeschaltstelle nach einem der Ansprüche 1 bis 6, **dadurch gekennzeichnet, dass** zwischen dem mindestens einen Zahnrad (16, 18) und der Schaltmuffe (24) eine formschlüssige oder kraftschlüssige Verbindung herstellbar ist.

8. Getriebeschaltstelle nach einem der Ansprüche 1 bis 7, **dadurch gekennzeichnet, dass** das mindestens eine Zahnrad (16, 18) eine Verzahnung (34, 36) in radialer oder in axialer Richtung aufweist, wobei die Schaltmuffe (24) eine hierzu im Wesentlichen komplementäre Verzahnung (30, 32) in radialer oder axialer Richtung aufweist.

9. Getriebeschaltstelle nach Anspruch 8, **dadurch gekennzeichnet, dass** die Verzahnung (30, 32, 34, 36) abweisend, gerade oder hinterschnitten ausgebildet ist.

10. Getriebeschaltstelle nach einem der Ansprüche 1 bis 9, **dadurch gekennzeichnet, dass** mindestens ein Kraftmittel (56, 58, 72) vorgesehen ist, unter dessen Krafteinwirkung der neutrale Zustand der Getriebeschaltstelle (10) herstellbar ist, insbesondere dann, wenn der mindestens eine Elektromagnet (38, 40) deaktiviert ist.

11. Getriebeschaltstelle nach einem der Ansprüche 1 bis 10, **gekennzeichnet durch** ein einzelnes Zahnrad (16) und eine Schaltmuffe (24) mit einem einzelnen Elektromagneten (38), wobei das Zahnrad (16) benachbart zu dem Elektromagneten (38) angeordnet ist, sodass bei einer Aktivierung des Elektromagneten (38) eine Relativbewegung zwischen dem Zahnrad (16) und dem Elektromagneten (38) bewirkbar ist, um das Zahnrad (16) und die Schaltmuffe (24) in einen eingerückten Zustand zu verbringen.

12. Getriebeschaltstelle nach einem der Ansprüche 1 bis 10, **gekennzeichnet durch** zwei Zahnräder (16, 18) und eine Schaltmuffe (24) mit zwei Elektromagneten (38, 40), wobei die Schaltmuffe (24) zwischen den beiden Zahnrädern (16, 18) angeordnet ist und jeweils ein Zahnrad (16, 18) benachbart zu einem der beiden Elektromagneten (38, 40) angeordnet ist, sodass bei einer Aktivierung einer der beiden Elektromagneten (38, 40) eine Relativbewegung zwischen dem jeweils benachbarten Zahnrad (16, 18) und dem Elektromagneten (38, 40) bewirkbar ist, um das Zahnrad (16, 18) und die Schaltmuffe (24) in einen eingerückten Zustand zu verbringen.

13. Getriebeschaltstelle nach einem der Ansprüche 1 bis 12, **dadurch gekennzeichnet, dass** das mindestens eine Zahnrad (16, 18) in Längsrichtung der Welle (12) verschiebbar angeordnet ist und die Schaltmuffe (24) in Längsrichtung der Welle (12) fest angebracht ist.

14. Getriebeschaltstelle nach einem der Ansprüche 1 bis 13, **dadurch gekennzeichnet, dass** zwischen der Schaltmuffe (24) und dem mindestens einen Zahnrad (16, 18) ein Kraftmittel (56, 58) vorgesehen ist, welches das mindestens eine Zahnrad (16, 18) von der Schaltmuffe (24) wegdrängt.

15. Getriebeschaltstelle nach einem der Ansprüche 1 bis 12, **dadurch gekennzeichnet, dass** das mindestens eine Zahnrad (16, 18) in Längsrichtung der Welle (12) fest angebracht ist und die Schaltmuffe (24) mit dem mindestens einen Elektromagneten (38, 40) in Längsrichtung der Welle (12) verschiebbar angeordnet ist.

16. Getriebeschaltstelle nach Anspruch 15, **dadurch gekennzeichnet, dass** ein Kraftmittel (72) vorgesehen ist, welches die Schaltmuffe (24) in eine von dem mindestens einen Zahnrad (16, 18) beabstandete Position drängt.

## Claims

1. Gearbox shifting point for producing a rotationally fixed connection between a toothed wheel and a shaft, having a shaft (12), a shifting sleeve (24) and at least one toothed wheel (16, 18), wherein the at least one toothed wheel (16, 18) is arranged so as to be rotatable with respect to the shaft (12), wherein the shifting sleeve (24) has at least one electromagnet (38, 40) and is mounted in a rotationally fixed fashion on the shaft (12), and wherein the at least one toothed wheel (16, 18) and the shifting sleeve (24) are embodied in such a way that when the at least one electromagnet (38, 40) is activated in a shifted state of the gearbox shifting point (10), a rotationally fixed connection can be produced between the at least one toothed wheel (16, 18) and the shifting sleeve (24), and in that in a neutral state of the gearbox shifting point (10) a rotationally fixed connection cannot be produced between the at least one toothed wheel (16, 18) and the shifting sleeve (24), **characterized in that** the at least one toothed wheel (16, 18) or the at least one electromagnet (38, 40) has at least one synchronization element (62, 64) with which a frictionally locking connection can be produced between the at least one toothed wheel (16, 18) and the shifting sleeve (24) when the at least one electromagnet (38, 40) is activated, in order to adjust the at least one toothed wheel (16, 18) to a rotational speed which corresponds essentially to the rotational speed of the shifting sleeve (24).

2. Gearbox shifting point according to Claim 1, **characterized in that** the at least one synchronization element (62, 64) is arranged such that it can move relative to the at least one toothed wheel (16, 18) in the longitudinal direction of the shaft (12), wherein the at least one synchronization element (62, 64) is of essentially annular or cylindrical design and is arranged in a cutout (70) of essentially annular or cylindrical design in the at least one toothed wheel (16, 18) or the at least one electromagnet (38, 40).

3. Gearbox shifting point according to Claim 1 or 2, **characterized in that** the at least one electromagnet (38, 40) and/or the shifting sleeve (24) has a friction lining (66, 68) which faces the at least one synchronization element (62, 64) and against which the at least one synchronization element (62, 64) comes to bear during the synchronization process.

4. Gearbox shifting point according to one of Claims 1 to 3, **characterized in that** the at least one electromagnet (38, 40) is integrated into the shifting sleeve (24).

5. Gearbox shifting point according to one of Claims 1 to 4, **characterized in that** the at least one electromagnet (38, 40) is of essentially annular design.

6. Gearbox shifting point according to one of Claims 1 to 5, **characterized in that** the at least one electromagnet (38, 40) has a coil (42, 44) and a core (46), wherein an energization device (48) is provided with which current can be applied to the coil (42,44) of the at least one electromagnet (38, 40), wherein the energization device (48) preferably has at least one slip ring (50, 52).

7. Gearbox shifting point according to one of Claims 1 to 6, **characterized in that** a positively locking or frictionally locking connection can be produced between the at least one toothed wheel (16, 18) and the shifting sleeve (24).

8. Gearbox shifting point according to one of Claims 1 to 7, **characterized in that** the at least one toothed wheel (16, 18) has a toothing (34, 36) in the radial direction or in the axial direction, wherein the shifting sleeve (24) has in the radial or axial direction a toothing (30, 32) which is essentially complementary to the latter.

9. Gearbox shifting point according to Claim 8, **characterized in that** the toothing (30, 32, 34, 36) is of repellent, straight or undercut design.

10. Gearbox shifting point according to one of Claims 1 to 9, **characterized in that** at least one force medium (56, 58, 72) is provided, under the force effect of which the neutral state of the gearbox shifting point (10) can be produced, in particular when the at least one electromagnet (38, 40) is deactivated.

11. Gearbox shifting point according to one of Claims 1 to 10, **characterized by** an individual toothed wheel (16) and a shifting sleeve (24) with an individual electromagnet (38), wherein the toothed wheel (16) is arranged adjacent to the electromagnet (38), with the result that when the electromagnet (38) is activated, a relative movement can be brought about between the toothed wheel (16) and the electromagnet (38), in order to adjust the toothed wheel (16) and the shifting sleeve (24) into an engaged state.

12. Gearbox shifting point according to one of Claims 1 to 10, **characterized by** two toothed wheels (16, 18) and a shifting sleeve (24) with two electromagnets (38, 40), wherein the shifting sleeve (24) is arranged between the two toothed wheels (16, 18), and in each case one toothed wheel (16, 18) is arranged adjacent to one of the two electromagnets (38, 40), so that when one of the two electromagnets (38, 40) is activated, a relative movement can be brought about between the respectively adjacent toothed wheel (16, 18) and the electromagnet (38, 40), in order to adjust the toothed wheel (16, 18) and the shifting sleeve (24) into an engaged state.

13. Gearbox shifting point according to one of Claims 1 to 12, **characterized in that** the at least one toothed wheel (16, 18) is arranged such that it can be slid in the longitudinal direction of the shaft (12), and the shifting sleeve (24) is fixedly mounted in the longitudinal direction of the shaft (12).

14. Gearbox shifting point according to one of Claims 1 to 13, **characterized in that** a force medium (56, 58) is provided between the shifting sleeve (24) and the at least one toothed wheel (16, 18), which force medium (56, 58) forces the at least one toothed wheel (16, 18) away from the shifting sleeve (24).

15. Gearbox shifting point according to one of Claims 1 to 12, **characterized in that** the at least one toothed wheel (16, 18) is fixedly mounted in the longitudinal direction of the shaft (12), and the shifting sleeve (24) is arranged with the at least one electromagnet (38, 40) in such a way that it can slide in the longitudinal direction of the shaft (12).

16. Gearbox shifting point according to Claim 15, **characterized in that** a force medium (72) is provided which forces the shifting sleeve (24) into a position which is spaced apart from the at least one toothed wheel (16, 18).

## Revendications

1. Point de changement de vitesse d'une boîte de vitesses pour l'établissement d'une liaison solidaire en rotation entre une roue dentée et un arbre, comprenant un arbre (12), un manchon de commande (24) et au moins une roue dentée (16, 18), l'au moins une roue dentée (16, 18) étant disposée de manière à pouvoir tourner par rapport à l'arbre (12), le manchon de commande (24) présentant au moins un électroaimant (38, 40) et étant monté de manière fixe en rotation sur l'arbre (12), l'au moins une roue dentée (16, 18) et le manchon de commande (24) étant réalisés de telle sorte que lors d'une activation de l'au moins un électroaimant (38, 40) dans un état commuté du point de changement de vitesse de la boîte de vitesses (10), une liaison solidaire en rotation entre l'au moins une roue dentée (16, 18) et le manchon de commande (24) puisse être établie, et que dans un état neutre du point de changement de vitesse de la boîte de vitesses (10) entre l'au moins une roue dentée (16, 18) et le manchon de commande (24), aucune liaison solidaire en rotation ne puisse être établie, **caractérisé en ce que** l'au moins une roue dentée (16, 18) ou l'au moins un électroaimant (38, 40) présente au moins un élément de synchronisation (62, 64), avec lequel une liaison par engagement par friction peut être établie entre l'au moins une roue dentée (16, 18) et le manchon de commande (24), lorsque l'au moins un électroaimant (38, 40) est activé, afin d'amener l'au moins une roue dentée (16, 18) à une vitesse de rotation qui correspond essentiellement à la vitesse de rotation du manchon de commande (24).

2. Point de changement de vitesse d'une boîte de vitesses selon la revendication 1, **caractérisé en ce que** l'au moins un élément de synchronisation (62, 64) est disposé de manière déplaçable relativement dans la direction longitudinale de l'arbre (12) vers l'au moins une roue dentée (16, 18), l'au moins un élément de synchronisation (62, 64) étant réalisé sous forme essentiellement annulaire ou cylindrique et étant disposé dans un évidement (70) essentiellement annulaire ou cylindrique de l'au moins une roue dentée (16, 18) ou de l'au moins un électroaimant (38, 40).

3. Point de changement de vitesse d'une boîte de vitesses selon la revendication 1 ou 2, **caractérisé en ce que** l'au moins un électroaimant (38, 40) et/ou le manchon de commande (24) présentent une garniture de friction (66, 68) tournée vers l'au moins un élément de synchronisation (62, 64), contre laquelle l'au moins un élément de synchronisation (62, 64) vient buter lors de l'opération de synchronisation.

4. Point de changement de vitesse d'une boîte de vitesses selon l'une quelconque des revendications 1 à 3, **caractérisé en ce que** l'au moins un électroaimant (38, 40) est intégré dans le manchon de commande (24).

5. Point de changement de vitesse d'une boîte de vitesses selon l'une quelconque des revendications 1 à 4, **caractérisé en ce que** l'au moins un électroaimant (38, 40) est réalisé essentiellement sous forme annulaire.

6. Point de changement de vitesse d'une boîte de vitesses selon l'une quelconque des revendications 1 à 5, **caractérisé en ce que** l'au moins un électroaimant (38, 40) présente une bobine (42, 44) et un noyau (46), un dispositif d'alimentation en courant (48) étant prévu, avec lequel la bobine (42, 44) de l'au moins un électroaimant (38, 40) peut être sollicitée en courant, le dispositif d'alimentation en courant (48) présentant de préférence au moins une bague collectrice (50, 52).

7. Point de changement de vitesse d'une boîte de vitesses selon l'une quelconque des revendications 1 à 6, **caractérisé en ce qu'**entre l'au moins une roue dentée (16, 18) et le manchon de commande (24) peut être créée une liaison par engagement par correspondance géométrique ou par force.

8. Point de changement de vitesse d'une boîte de vitesses selon l'une quelconque des revendications 1 à 7, **caractérisé en ce que** l'au moins une roue dentée (16, 18) présente une denture (34, 36) dans la direction radiale ou axiale, le manchon de commande (24) présentant une denture (30, 32) essentiellement complémentaire à celle-ci dans la direction radiale ou axiale.

9. Point de changement de vitesse d'une boîte de vitesses selon la revendication 8, **caractérisé en ce que** la denture (30, 32, 34, 36) est réalisée de manière déflectrice, droite ou en contre-dépouille.

10. Point de changement de vitesse d'une boîte de vitesses selon l'une quelconque des revendications 1 à 9, **caractérisé en ce qu'**au moins un élément de force (56, 58, 72) est prévu, lequel permet d'établir, par son effet de force, l'état neutre du point de changement de vitesse de la boîte de vitesses (10), notamment lorsque l'au moins un électroaimant (38, 40) est désactivé.

11. Point de changement de vitesse d'une boîte de vitesses selon l'une quelconque des revendications 1 à 10, **caractérisé par** une roue dentée unique (16) et un manchon de commande (24) avec un électroaimant unique (38), la roue dentée (16) étant disposée à côté de l'électroaimant (38), de sorte que lors d'une activation de l'électroaimant (38), un mouvement relatif entre la roue dentée (16) et l'électroaimant (38) puisse être provoqué, afin d'amener la roue dentée (16) et le manchon de commande (24) dans un état embrayé.

12. Point de changement de vitesse d'une boîte de vitesses selon l'une quelconque des revendications 1 à 10, **caractérisé par** deux roues dentées (16, 18), et un manchon de commande (24) avec deux électroaimants (38, 40), le manchon de commande (24) étant disposé entre les deux roues dentées (16, 18) et à chaque fois une roue dentée (16, 18) étant disposée à côté de l'un des deux électroaimants (38, 40), de sorte que lors d'une activation de l'un des deux électroaimants (38, 40), un mouvement relatif entre la roue dentée respectivement adjacente (16, 18) et l'électroaimant (38, 40) puisse être réalisé, afin d'amener la roue dentée (16, 18) et le manchon de commande (24) dans un état embrayé.

13. Point de changement de vitesse d'une boîte de vitesses selon l'une quelconque des revendications 1 à 12, **caractérisé en ce que** l'au moins une roue dentée (16, 18) est disposée de manière déplaçable dans la direction longitudinale de l'arbre (12) et le manchon de commande (24) est monté fixement dans la direction longitudinale de l'arbre (12).

14. Point de changement de vitesse d'une boîte de vitesses selon l'une quelconque des revendications 1 à 13, **caractérisé en ce qu'**entre le manchon de commande (24) et l'au moins une roue dentée (16, 18) est prévu un élément de force (56, 58) qui repousse l'au moins une roue dentée (16, 18) du manchon de commande (24).

15. Point de changement de vitesse d'une boîte de vitesses selon l'une quelconque des revendications 1 à 12, **caractérisé en ce que** l'au moins une roue dentée (16, 18) est montée fixement dans la direction longitudinale de l'arbre (12) et le manchon de commande (24) avec l'au moins un électroaimant (38, 40) est disposé de manière déplaçable dans la direction longitudinale de l'arbre (12).

16. Point de changement de vitesse d'une boîte de vitesses selon la revendication 15, **caractérisé en ce qu'**il est prévu un élément de force (72) qui pousse le manchon de commande (24) dans une position écartée de l'au moins une roue dentée (16, 18).
